**Europäisches Patentamt**

(19) **European Patent Office**

**Office européen des brevets**

(11) Veröffentlichungsnummer: **0 180 033**

**B1**

(12) # EUROPÄISCHE PATENTSCHRIFT

(45) Veröffentlichungstag der Patentschrift:
08.03.89

(21) Anmeldenummer: 85111917.2

(22) Anmeldetag: 20.09.85

(51) Int. Cl.⁴: **B 60 K 41/28,** B 60 K 28/16,
**B 60 T 8/00**

(54) **Antriebsschlupfregelsystem.**

(30) Priorität: 29.09.84 DE 3435869

(43) Veröffentlichungstag der Anmeldung:
07.05.86 Patentblatt 86/19

(45) Bekanntmachung des Hinweises auf die Patenterteilung:
08.03.89 Patentblatt 89/10

(84) Benannte Vertragsstaaten:
DE FR GB IT SE

(56) Entgegenhaltungen:
EP-A-0 064 669
EP-A-0 106 112
US-A-3 741 043

(73) Patentinhaber: ROBERT BOSCH GMBH, Postfach 50, D-7000 Stuttgart 1 (DE)

(72) Erfinder: Jonner, Wolf- Dieter, Dipl. Ing. (FH),
Burgunderstrasse 25, D-7141 Beilstein (DE)
Erfinder: Sigl, Alfred, Dipl.- Ing., Waldeckstrasse
8, D-7126 Gersheim (DE)

(74) Vertreter: Kammer, Arno, Dipl.- Ing., ROBERT
BOSCH GmbH Zentralstelle Patente 2 Postfach
50, D-7000 Stuttgart 1 (DE)

LIBER, STOCKHOLM 1989

## Beschreibung

Die Erfindung betrifft ein Antriebsschlupfregelsystem mit den Merkmalen des Oberbegriffs des Anspruches 1.

Ein derartiges Antriebsschlupfregelsystem ist z. B. aus der DE-OS-3 127 302 bekannt. Dort wird, wenn Antriebsschlupf entsprechender Größe an einem Rad auftritt, dieses Rad geregelt gebremst und zusätzlich, wenn an beiden Rädern Antriebsschlupf entsprechender Größe auftritt, das Motormoment geregelt variiert.

Aus der US-PS-3 741 043 ist es auch schon bekannt, bei Durchdrehneigung der Fahrzeugräder zur Verminderung des Antriebsmoments das Getriebe lediglich in einen höheren Gang zu schalten.

Die erfindungsgemäßen zusätzlichen Maßnahmen gemäß den Merkmalen des Anspruches 1 sollen derartige Antriebsschlupfregelsysteme weiter verbessern. Dabei wird vorzugsweise mit dem Regelbeginn für das Motormoment die Schaltung in den höheren Gang vorgenommen, so daß bereits dadurch eine Reduzierung des Motorantriebsmoments erfolgt, so daß die erforderliche Verstellung der Drosselklappe verringert werden kann. Die Rückumschaltung auf den kleineren Gang wird vorzugsweise vom Fahrer mittels des Gaspedals (kick-down) vorgenommen. Bei der Kombination ASR mit Automatikgetriebe kann eine Mitkopplung (Pendelschaltung) zwischen Schaltvorgängen und Drosselklappensprüngen auftreten, wenn die Schaltpunkte des Getriebes nicht vom Fahrpedal, sondern von der Drosselklappenstellung abhängig sind. Diese Mitkopplung beeinträchtigt den Regelkomfort wesentlich. Die Mitkopplung (Pendelschaltung) wird gemäß dem weiteren Merkmal des Anspruches 1 durch Vergrößerung der Schalthysterese mit Hilfe des gleichen Steuersignals verhindert.

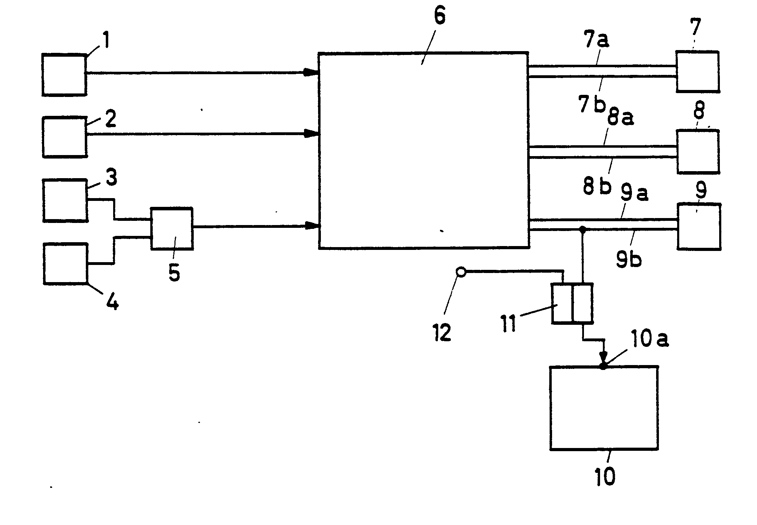

Anhand der Zeichnung wird ein Ausführungsbeispiel der Erfindung erläutert.

In der Zeichnung sind mit 1 und 2 den angetriebenen Rädern zugeordnete Meßwertgeber für die Radgeschwindigkeit bezeichnet, mit 3 und 4 den nicht angetriebenen Rädern zugeordnete Meßwertgeber. In einem Block 5 wird ein Signal erzeugt, das dem Mittelwert der Radgeschwindigkeiten entspricht. Dieses Signal wird zusammen mit den Signalen der Meßwertgeber 1 und 2 einer Auswerteschaltung 6 zugeführt, die auf Leitungen 7a und 7b, 8a und 8b sowie 9a und 9b Signale zur Beeinflussung von Stellgliedern 7 und 8 zur Druckvariation an den beiden angetriebenen Rädern und 9 zur Variation des Motormoments erzeugt. Ein Steuersignal auf den a-Leitungen soll jeweils eine Erhöhung des Bremsdrucks bzw. des Motormoments bewirken, ein Signal auf den b-Leitungen jeweils eine Erniedrigung. Die Stellglieder 7 und 8 enthalten z. B. Ventile, das Stellglied 9 z. B. einen Motor zur Verstellung der Drosselklappe.

Mit 10 ist ein automatisches Getriebe des Fahrzeugs bezeichnet, das durch elektrische Signale geschaltet wird. Dieses kann durch Zuführung eines elektrischen Signals über den Eingang 10a veranlaßt werden, daß es auf den nächsthöheren Gang gegenüber dem augenblicklichen wirksamen Gang umschaltet. Im Beispiel der Zeichnung wird diese Umschaltung durch ein Signal auf Leitung 9b ausgelöst, das auftritt, wenn das Motormoment reduziert werden soll. Dieses Signal kippt eine bistabile Kippstufe 11, die dann das Signal zur Umschaltung und zum Verharren in der neuen Schaltstellung liefert und gleichzeitig eine Vergrößerung der Hysterese der Umschaltpunkte des Getriebes bewirkt. Erst durch ein vom Gaspedal bei kurzem Durchtreten (kick-down) erzeugtes weiteres Signal, das über eine Klemme 12 eingekoppelt wird, wird das Hochschalten des Getriebes 10 wieder unwirksam gemacht. Die Rückschaltung wird der Fahrer auslösen, wenn ihm dies aufgrund der Umstände sinnvoll erscheint.

## Patentansprüche

1. Antriebsschlupfregelsystem für ein Straßenfahrzeug mit automatischem Getriebe, bei dem bei einer Durchdrehneigung an wenigstens einem angetriebenen Rad (1, 2) eine Regelung des Bremsdrucks an wenigstens einem angetriebenen Rad und/oder des Antriebsmoments vorgenommen wird, dadurch gekennzeichnet, daß mittels eines bei Beginn der Regelung, insbesondere Beginn der Motormomentenregelung, ausgelösten Steuersignals in einen höheren Gang geschaltet wird, und daß zusätzlich die Hysterese der Umschaltpunkte des Getriebes (10) mittels dieses Steuersignals vergrößert wird.

2. Antriebsschlupfregelsystem nach Anspruch 1, dadurch gekennzeichnet, daß das Schalten auf den höheren Gang durch Durchtreten des Gaspedals (kick-down) rückgängig machbar ist.

3. Antriebsschlupfregelsystem nach einem der Ansprüche 1 oder 2, dadurch gekennzeichnet, daß ein Zurückschalten (auch durch KD) verhindert wird.

## Claims

1. Slip control system for drive gear for a road vehicle having automatic transmission, wherein a control of the brake pressure at at least one driven wheel and/or of the drive torque is effected in the case of a tendency to spin at at least one driven wheel (1, 2), characterized in that a shift into a higher gear is effected by means of a control signal tripped at the start of the control, in particular start of the engine torque control, and that the hysteresis of the shift points of the transmission (10) is also increased by means of this control signal.

2. Slip control system for drive gear according to Claim 1, characterized in that the shift to the higher gear can be reversed by depressing the accelerator pedal (kick-down).

3. Slip control system for drive gear according to either of Claims 1 or 2, characterized in that a reverse shift (even by KD) is prevented.

**Revendications**

1. Système de régulation du glissement à la propulsion pour un véhicule routier équipé d'une boîte de vitesses automatique, dans lequel, en présence d'une tendance au patinage sur au moins une roue motrice (1, 2), il se produit une régulation de la pression de freinage sur au moins une roue motrice et/ou une régulation du couple moteur, caractérisé en ce que, au moyen d'un signal de commande déclenché au début de la régulation, en particulier au début de la régulation du couple du moteur, la boîte de vitesses est commutée sur un rapport supérieur et en ce que, en supplément, l'hystérésis des points de manoeuvre de la boîte de vitesses (10) est élargie au moyen de ce signal de commande.

2. Système de régulation du glissement à la propulsion selon la revendication 1, caractérisé en ce que le passage au rapport supérieur peut être annulé par enfoncement de la pédale d'accélérateur (kick-down).

3. Système de régulation du glissement à la propulsion selon une des revendications 1 et 2, caractérisé en ce que le rétrogradage de la boîte est interdit (même avec kick-down).